# EUROPÄISCHE PATENTSCHRIFT

(11) **EP 0 904 886 B1**
(45) Veröffentlichungstag und Bekanntmachung des Hinweises auf die Patenterteilung: **04.06.2003**
(21) Anmeldenummer: 97116420.7
(22) Anmeldetag: 20.09.1997
(51) Int. Cl.: B23K 26/00, B23K 26/02

(54) **Verfahren zur Geometrieerkennung und -verfolgung bei der thermischen Bearbeitung von Bauteilen mittels Laserstrahlung**
Process for geometry recognition and tracking during thermal treatment of elements by means of laser beam
Procédé de reconnnaissance de géométrie et de suivi au cours de traitement thermique d'éléments au moyen de faisceau laser

(43) Veröffentlichungstag der Anmeldung: 31.03.1999
(73) Patentinhaber: INPRO Innovationsgesellschaft für fortgeschrittene Produktionssysteme in der Fahrzeugindustrie mbH, 10587 Berlin (DE)
(72) Erfinder: Bloehs, Wolfgang, Dr., 10587 Berlin (DE); Brandl, Toni, 10587 Berlin (DE)
(74) Vertreter: Hoffmann, Klaus-Dieter, Dipl.-Ing.

(56) Entgegenhaltungen:
- GB-A- 2 196 155
- PATENT ABSTRACTS OF JAPAN vol. 011, no. 359 (E-559), 21.November 1987 & JP 62 136039 A (ROHM CO LTD), 19.Juni 1987,

## Beschreibung

Die Erfindung betrifft ein Verfahren zur Geometrieerkennung und - verfolgung mittels ortsaufgelöster Temperaturmessung bei der thermischen Bearbeitung eines Bauteils mittels Laserstrahlung, insbesondere beim Umwandlungshärten mit Laserstrahlung, wobei das Temperaturfeld des Bauteils auf berührungslosem Wege mittels eines photothermischen Sensorsystems erfaßt wird.

Die Erfindung betrifft ferner ein Verfahren zum Härten von Werkstückoberflächen mittels Strahlen, insbesondere mittels Laserstrahlen, bei dem eine laserstrahlformende Härteoptik und die Werkstückoberfläche relativ zueinander bewegt werden, der Auftreffort des Arbeitslaserstrahlflecks während des Härtens durch Ablenkbewegung von Strahlumformungseinrichtungen der Härteoptik quer zur Vorschubrichtung oszilliert, und die Temperaturstrahlung des quer zur Vorschubeinrichtung oszillierenden Auftreffortes des Arbeitslaserstrahlflecks mittels teildurchlässiger Spiegel kolinear zum Strahlengang des Arbeitslasers durch die Härteoptik hindurch einer Temperaturkontrolleinrichtung zugeführt wird, von der stets momentan die Temperatur im Auftreffort des Arbeitslaserstrahlflecks erfaßt wird, die ermittelten Temperaturmeßdaten einem mit der Strahlquelle, der Strahlablenkung und der Vorschubbewegung gekoppelten Regler eingegeben werden, in dem eine Temperaturverteilung quer zur Vorschubrichtung ermittelt wird und über den eine darauf abgestimmte Verteilung der Laserstrahlenergie und eine angepaßte Steuerung der Ablenkbewegung der Strahlumformungseinrichtungen der Härteoptik und der Vorschubbewegung unter Berücksichtigung bearbeitungsspezifischer Vorgaben erfolgen.

Nach der GB 2 196 155 A ist es beim Härten von Kohlenstoffstahl mittels Laserstrahlung bekannt, das Temperaturfeld eines gehärteten Bauteils mittels eines photothermischen Sensorsystems, das einen Infrarotdetektor und einen Konverter zur Anzeige der Temperatur des gehärteten Bauteils aufweist, berührungslos zu erfassen, wobei über eine Plottereinrichtung die Temperaturveränderungen des Bauteils aufgezeichnet werden. Aus letzteren werden z.B. die maximale Härte und die Härtetiefe bestimmt, und die Stärke und/oder Geschwindigkeit des Laserstrahls kann zur Erzielung der erwünschten Charakteristika des Härtens entsprechend eingestellt werden.

Das Umwandlungshärten mittels Laserstrahlung ermöglicht im Vergleich zu herkömmlichen Härteverfahren eine Verringerung der Wärmeeinbringung in das Bauteil und damit eine Verminderung des Bauteilverzuges. Der Einsatz einer faseroptischen Strahlübertragung bedingt ferner eine hohe Flexibilität der Bearbeitungseinrichtung und eine verhältnismäßig leichte Integration des Laserstrahlhärtens in bestehende Anlagen. Hierbei können Arbeitsabläufe effektiv umgestaltet werden, so daß der Aufwand bei einzelnen Arbeitsschritten verringert oder diese vollkommen eingespart werden können. So müssen z.B. beim Randschichthärten im Werkzeugbau derzeit noch Großwerkzeuge, beispielsweise Beschnittwerkzeuge, für die Ofenhärtung demontiert und nach einer häufig aufwendigen Nacharbeit wieder montiert werden. Das Randschichthärten mittels Laserstrahlung bietet hierbei den Vorteil, das zum einen wegen des verhältnismäßig geringen Werkzeugverzuges beim Laserhärten im Vergleich zur herkömmlichen Flamm- oder Ofenhärtung die erforderliche Nacharbeit nach dem Härten reduziert wird. Zum anderen ermöglichen eine flexible Strahlführung sowie eine kompakte Bearbeitungsoptik die Bearbeitung des Werkzeugs im montierten Zustand, wodurch zusätzlich der Aufwand der Demontage und Wiedermontage entfällt.

Die benannten Vorteile werden jedoch in vielen Fällen relativiert, wenn aufgrund komplexer Werkstückgeometrien ein hoher Aufwand zur Programmierung der Bahn des Bearbeitungskopfes erforderlich ist. Die große Anzahl verschiedenartiger Werkzeuggeometrien sowie eine hohe Erneuerungsrate bei Werkzeugen reduzieren hierbei die Wiederverwendungsmöglichkeit einmal sehr aufwendig programmierter Bahnen.

Abhilfe schafft die Ankopplung von Zusatzeinrichtungen, bestehend aus einem zusätzlichen, externen Bahnsensor und gegebenenfalls einem Aktor, welche eine automatische Nachführung des Bearbeitungswerkzeuges gestatten. Damit ist jedoch ein erhöhter Aufwand verbunden. Außerdem besteht die Schwierigkeit der Anpassung und Anbindung an das vorhandene Bearbeitungssystem, und in aller Regel ist eine verringerte Zugänglichkeit durch einen weniger kompakten Aufbau des Bearbeitungswerkzeugs gegeben.

Der Erfindung liegt die Aufgabe zugrunde, bei der thermischen Bearbeitung von Bauteilen mittels Laserstrahlung, insbesondere beim Umwandlungshärten mit Laserstrahlung, unter Vermeidung der oben genannten Nachteile dafür zu sorgen, daß in ökonomischer und effektiver Weise eine Geometrieerkennung und - verfolgung des zu bearbeitenden Bauteils möglich ist.

Diese Aufgabe wird erfindungsgemäß dadurch gelöst, daß die Erfassung des im Bauteil durch die Prozeßwärme erzeugten Temperaturfeldes in seiner zweidimensionalen Projektion erfolgt, basierend auf Variationen der durch Änderung der Bauteilgeometrie und der dadurch bedingten Volumen- und/oder Materialverteilung hervorgerufenen lokalen Wärmeleitung aus den ermittelten Daten des Temperaturfeldes die Bauteillage und - gestalt berechnet werden und nach Identifikation der charakteristischen Bauteilgeometrie spezielle Behandlungsalgorithmen für die jeweiligen erforderlichen Behandlungssituationen zielgerichtet eingesetzt werden.

Vorzugsweise werden die speziellen Behandlungsalgorithmen zielgerichtet zur Drosselung der Energiezufuhr an kritischen Stellen des Bauteils wie Kanten, Spitzen, Bohrungen und dgl. eingesetzt.

Die Identifikation einer Bauteilkante und deren Lage zum Bearbeitungssystem kann zur Steuerung eines Aktors genutzt werden derart, daß die Lage der Bearabeitungszone durch einen Soll-Ist-Vergleich korrigiert wird und somit eine Positionsregelung auf der Basis eines photothermischen Sensors möglich ist. Als Aktor kann ein gesteuerter Schwingspiegelantrieb verwendet werden. Auch können die der Identifikation der Bauteile entsprechenden speziellen Behandlungsalgorithmen für die Bahnführung eines Roboters eingesetzt werden.

Das erfindungsgemäße Verfahren nach dem Oberbegriff des Patentanspruchs 7 zeichnet sich dadurch aus, daß die ermittelten Temperaturmeßdaten fortlaufend dahingehend analysiert werden, ob die Proportionalität der Abweichung der Regelgröße (Temperatur) und der Stellgrößen (Laserleistung; Ablenkbewegung der Strahlumformungseinrichtungen; Vorschubbewegung) gewahrt ist, und im Fall, daß ein Temperaturwert unterhalb eines festgelegten Schwellenwerts ermittelt wird, obwohl die Laserleistung erhöht worden ist, was insbesondere an Kanten auftritt, der Bearbeitungs- / Meßbereich automatisch in unterschiedliche Teilsysteme / Bereiche aufgeteilt wird, für die einserseits die Proportionalität der Abweichung von Regelgröße und Stellgrößen wie zuvor gilt und in denen andererseits bei hoher Ablenkgeschwindigkeit nur eine verhältnismäßig geringe Energiemenge eingetragen wird.

Die Erfindung bringt den Vorteil mit sich, daß die tatsächliche Geometrie bzw. die Materialsverteilung des Bauteils vor der Bearbeitung nicht bzw. nicht exakt vorgegeben werden muß. Durch die selbsttätige Ermittlung der Systemgrenzen ist auch deren Lage im Raum bekannt, so daß die Kenntnis der Bauteilgeometrie z.B. für die Bahnführung des Roboters eingesetzt werden kann,

Die Erfindung ermöglicht es, ohne zusätzliche sensorische Einrichtungen direkt aus der Prozeßwärme on-line Informationen über die Lage und die geometrische Gestalt des zu bearbeitenden Bauteils zu gewinnen. Die genaue Kenntnis der Bauteillage und -gestalt erlaubt es, spezifische geometrieabhängige Bearbeitungsalgorithmen anzuwenden und zu kontrollieren und/oder mit Hilfe eines geeigneten Aktors - z.B. eines gesteuerten Schwingspiegels - die tatsächliche Lage an die Soll-Lage anzupassen. Generell ist in jedem Fall ein transientes Temperaturfeld im Bauteil / Werkstück zu induzieren. Je nach Vorgehensweise gibt es zwei prinzipielle Möglichkeiten, um Informationen über die Materialverteilung in dem Bauteil zu erhalten, und zwar:

Wird dem Bauteil die Wärme gleichförmig und homogen zugegeführt, so ergeben sich unterschiedliche Temperaturen, so daß die Materialverteilung (Art, Menge, Ausdehnung) durch eine ortsaufgelöste Temperaturmessung ermittelt werden kann.

Es kann aber auch eine homogene Temperaturverteilung im Bauteil erzeugt werden, wozu allerdings eine ortsaufgelöste Energiezufuhr notwendig ist. Aus der räumlichen Verteilung dieser Energiezufuhr lassen sich ebenfalls Rückschlüsse auf die Materialverteilung ziehen. Als zusätzliche Information in diesem Fall können auch die verbleibenden Regelabweichungen des Temperatursignals dienen, da diese prinzipbedingt nie zu Null werden können.

Die Erfindung wird nun anhand der Zeichnungen erläutert. In diesen sind:
- Fig. 1: eine prinzipielle blockschaltbildartige Darstellung einer Vorrichtung zur Durchführung des Verfahrens der Erfindung,
- Fig. 2 bis Fig. 5: schematische Draufsichtdarstellungen eines Werkstücks mit zugeordnetem Strahlfleck, die die Kantenerkennung und -verfolgung bei einseitiger Bestrahlung einer Werkstückkante verdeutlichen sollen,
- Fig. 6 bis Fig. 10: weitere ähnliche schematische Darstellungen des Werkstücks mit zugeordneter Laserstrahlführung bzw. zugeordnetem Strahlfleck, die eine angepaßte Kantenbehandlung bei nicht nur einseitiger Bestrahlung einer Kante verdeutlichen sollen,
- Fig. 11: eine Seitenansicht des Werkstücks mit zugeordnetem Laserstrahl bei der Kantenerkennung,
- Fig. 12: ein Diagramm, aus dem der Temperaturverlauf über die Spurbreite hervorgeht,
- Fig. 13: eine schematische Schnittansicht eines zu härtenden, mit Gewindebohrungen versehenen Werkzeugteils,
- Fig. 14: ein Diagramm, aus dem die Laserleistung und die relative Temperatur über die Bearbeitungsdauer eines Werkstücks gemäß Fig. 13 hervorgeht, und
- Fig. 15: ein 3D-Plot der beim Härten über zwei Bohrungen hinweg gemesenene Temperaturverteilung

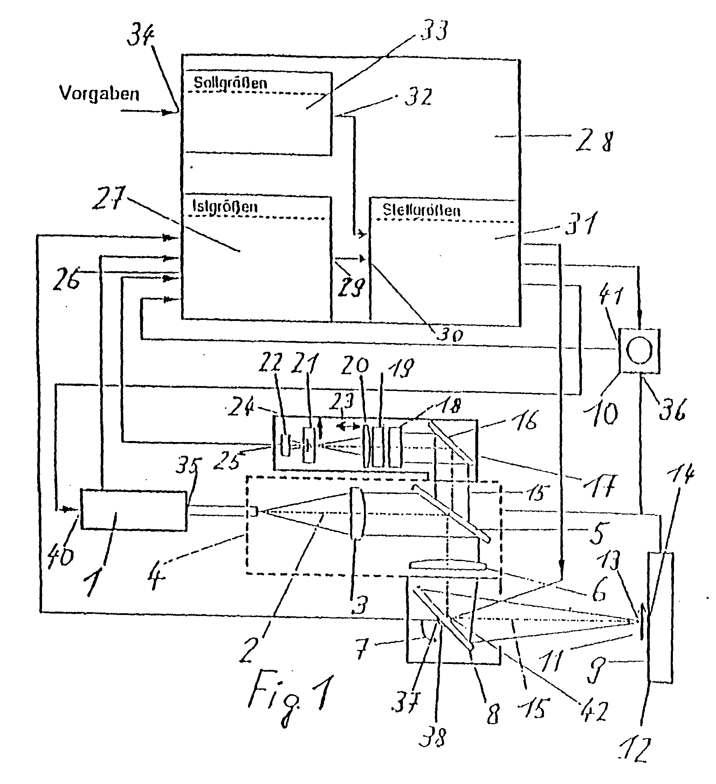

Wie aus Fig. 1 hervorgeht, die ein Prinzipbild einer Vorrichtung zur Durchführung des Verfahrens zeigt,wird der von einer Strahlquelle 1, z.B. einem Festkörperlaser kommende Leistungsstrahl 2 einer laserstrahlformenden Härteoptik 4 zugeführt wird, in der er von einer Linse 3 auf einen teildurchlässigen Umlenkspiegel 5 gelenkt und nach Umlenkung um 90° durch letzteren über eine weitere Linse 6 auf einen hinsichtlich seiner Ablenkgeschwindigkeit (Pfeil 7) steuerbaren Schwingspiegel 8 gerichtet wird. Von dem Schwingspiegel 8 wird der Leistungsstrahl 2 auf die Oberfläche 9 eines von einem Antriebsmotor 10 bewegbaren (siehe Doppelpfeil 11) Werkstücks 12 derart zum Härten des letzteren zu einem Strahlfleck fokussiert, daß der Auftreffort 14 des Arbeitslaserstrahlflecks 13 während des Härtens durch die Ablenkbewegung des Schwingspiegels 8 quer zur Vorschubrichtung 11 des Werkstücks 12 oszilliert.

Die unmittelbar vom jeweiligen Auftreffort 14 des Arbeitslaserstrahlflecks 13 kommende Temperaturstrahlung 15 wird kolinear zum Strahlgang 2 des Arbeitslasers 1 durch die Härteoptik 4 hindurchgeführt, d.h. sie verläuft, wie aus Fig. 1 ersichtlich, vom Auftreffort 14 des Arbeitslaserstrahlflecks 13 zum Schwingspiegel 8 und von diesem über die Linse 6 zu dem teildurchlässigen Spiegel 5 der Härteoptik 4, durch den sie hindurchtritt und auf einen Umlenkspiegel 16 einer Temperaturkontrolleinrichtung 17 gelangt. Nach Umlenkung um 90° in der Temperaturkontrolleinrichtung durch den Umlenkspiegel 16 wird die Temperaturstrahlung durch eine Anordnung aus einem Bandpaßfilter 18, einer Blende 19 und einer Linse 20 gelenkt und von letzterer auf eine Lochblende 21 fokussiert, der in Strahlrichtung ein IR-Detektor 22 nachgeordnet ist.Die Linse 20 und die Lochblende 21 sind, wie aus den Doppelpfeilen 23 bzw. 24 ersichtlich ist, in Strahlrichtung bzw. senkrecht zu dieser hin- und herbeweglich. Von dem IR-Detektor 22 wird stets exakt die Temperatur in jedem Auftreffpunkt 14 des Arbeitslaserstrahlflecks unmittelbar gemessen.

Mit dem IR-Detektor 22 und damit mit dem Ausgang 25 der Temperaturkontrolleinrichtung 17 ist ein Eingang 26 eines Istgrößen verarbeitenden Regelkreises 27 eines Reglers 28 verbunden, dessen Ausgang 29 wiederum mit dem Eingang 30 eines Stellgrößen erzeugenden Regelkreises 31 des Reglers verbunden ist. Der Eingang 30 des Regelkreises 31 ist weiterhin mit dem Ausgang 32 eines weiteren Sollgrößen verarbeitenden Regelkreises 33 des Reglers 28 verbunden, in dessen Eingang 34 bearbeitungsspezifische Vorgaben als Bearbeitungsparameter eingebbar sind.

Der Eingang 26 des Regelkreises 27 des Reglers 28 ist weiterhin mit dem Ausgang 35 der Strahlquelle 1,dem Ausgang 36 des die Vorschubbewegung erzeugenden Antriebsmotors 10 und dem Ausgang 37 eines Antriebs 38 des hinsichtlich seiner Ablenkgeschwindigkeit steuerbaren Ablenkspiegels 8 zur Aufnahme der Ist-Strahlleistung bzw. der Ist-Vorschubbewegung bzw. der Ist-Strahlablenkung verbunden.

Dem Eingang 34 des Sollgrößen verarbeitenden Regelkreises 33 des Reglers 28 werden als bearbeitungsspezifische Vorgagaben, aus denen sich die geforderten Temperaturen oder geforderte Energiezufuhr bestimmen lassen,z.B. Materialeigenschaften, die Einhärttiefe, die Erwärmungs- und Abkühlungsdauer,die Werkstücksgeometrie,die Auslenkbewegung, die Vorschubbewegung und die Bearbeitungszeit eingegeben.

Der Ausgang 39 des Regelkreises des Reglers 28, in dem aus den über den Eingang 30 eingegebenen Istgrößen und Sollgröβen nach deren Abgleich die erforderlichen Stellgrößen erzeugt werden, ist mit dem Eingang 40 der Strahlquelle 1, dem Eingang 41 des Antriebsmotors 10 und dem Eingang 42 des Antriebs 38 des Schwingspiegels 8 zur Steuerung der Laserstrahlenergie bzw. der Vorschubbewegung bzw. der Strahlablenkung verbunden.

Basierend auf den Variationen der stets in den Auftrefforten 14 des Arbeitslaserstrahlflecks 13 momentan gemessenen Temperaturen, die durch Änderungen der Bauteilgeometrie und die dadurch bedingte Volumen- und/oder Materialverteilung hervorgerufen werden, wird mittels des Rechners des Reglers 28 die Bauteillage - und gestalt berechnet.Entsprechend der Identifikation der charakteritsichen Bauteilgeometrie werden spezielle Behandlungsalgorithmen für die jeweilige erforderlich Behandlungssituation zielgerichtet von dem Regler 28 zum Einsatz gebracht. So werden z.B. die sepziellen Behandlungsalgorithmen zielgerichtet zur Drosselung der Energiezufuhr an kritischen Stellen des Bauteils wie Kanten, Spitzen, Bohrungen und dergleichen eingesetzt.

Der Regler 28 analysiert die ermittelten Temperaturmeßdaten fortlaufend, ob die Proportionalität der Abweichung der Regelgröße (Temperatur) und der Stellgrößen (Laserleistung; Ablenkbewegung des Ablenkspiegels; Vorschubbewegung) gewahrt ist. Wird ein Temperaturwert (Regelgröße) unterhalb eines festgelegten Schwellwertes festgestellt, obwohl sich die Laserleistung (Stellgröße) erhöht, so wird bei Ausnutzung des Systems sofort automatisch der Bearbeitungs- /Meßbereich des Reglers in unterschiedliche Teilsysteme /Bereiche aufgeteilt, für die einerseits die Proportionalität der Abweichung von Regelgröße und Stellgröße wie bisher gilt und in denen andererseits bei hoher Ablenkgeschwindigkeit nur eine verhältnismäßig geringe Energiemenge eintragen wird.

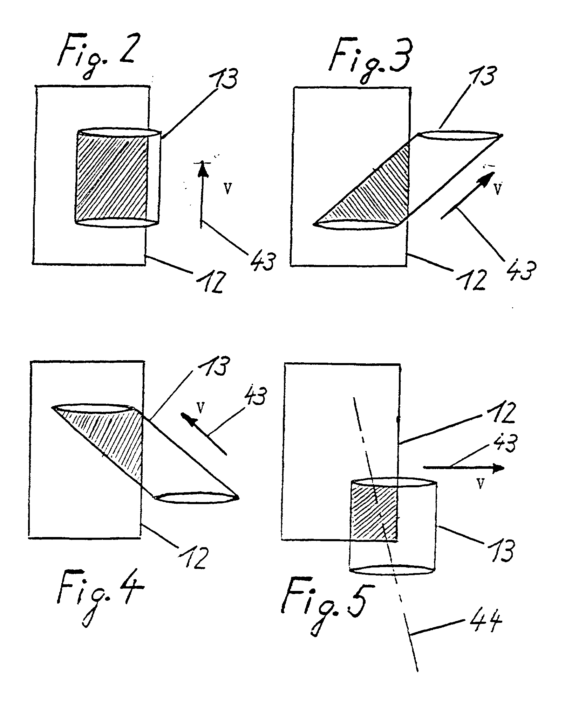

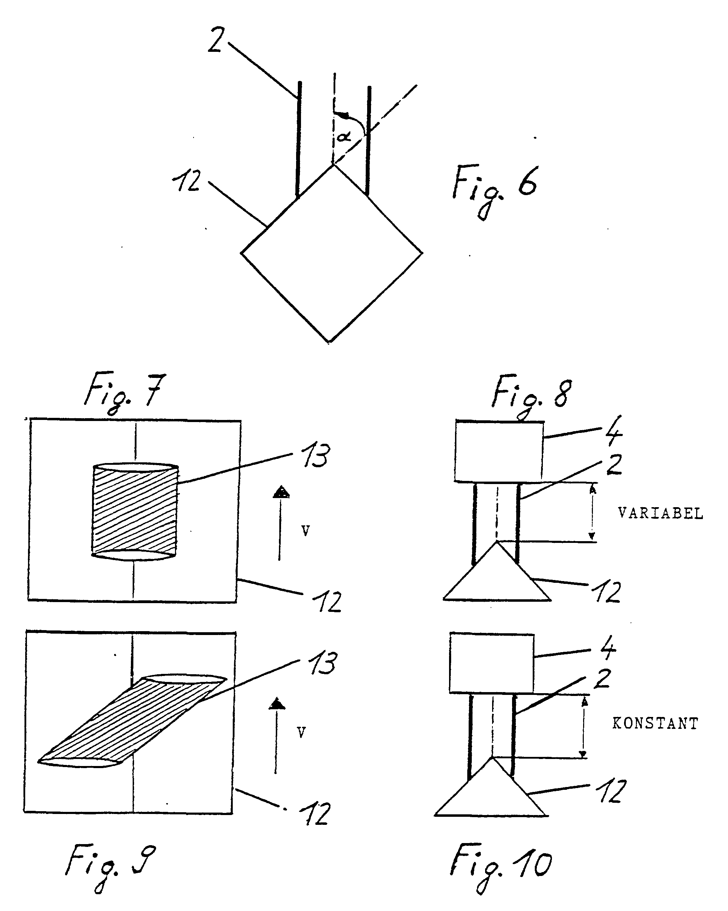

Aus den Fig. 2 bis 4, die schematisch Draufsichten auf ein Werkstück 12 mit zugeordnetem Arbeitslaserstrahlfleck 13 zeigen, geht die Erkennung der Kantenposition im Strahlfleck 13 bei unterschiedlichen Bewegungsrichtungen (Pfeil 43) des Strahlflecks 13 zum Werkstück 12 hervor. Das an der Kantenposition über den Strahlfleck auf berührungslosem Weg ermittelte, deutlich veränderte Temperaturfeld und die verfahrensgemäße Ermittlung eines Temperaturwertes unterhalb eines festgelegten Schwellwertes trotz einer Erhöhung der Laserleistung führt zur automatischen Aufteilung des Bearbeitungs- / Meßbereichs des Reglers in unterschiedliche Teilsysteme / Bereiche des letzteren derart,daß eine besondere Behandlung der Kantengeometrie erfolgt, um diese z.B. vor Aufschmelzungen zu schützen. Verfahrensgemäß ist auch die Kantenposition bezüglich der Bearbeitungsmaschine (Härteoptik) bestimmbar. Wie aus Fig. 5 ablesbar ist,können die Positionen von Strahlfleck und Kante durch Veränderung der Strahlfleckposition über angepaßte Scanbewegung relativ zueinander konstant gehalten werden. In Fig. 5 ist die beispielhafte Bahn der Führungsmaschine, die auch nichtlinear sein kann, mit "44" gekennzeichnet.

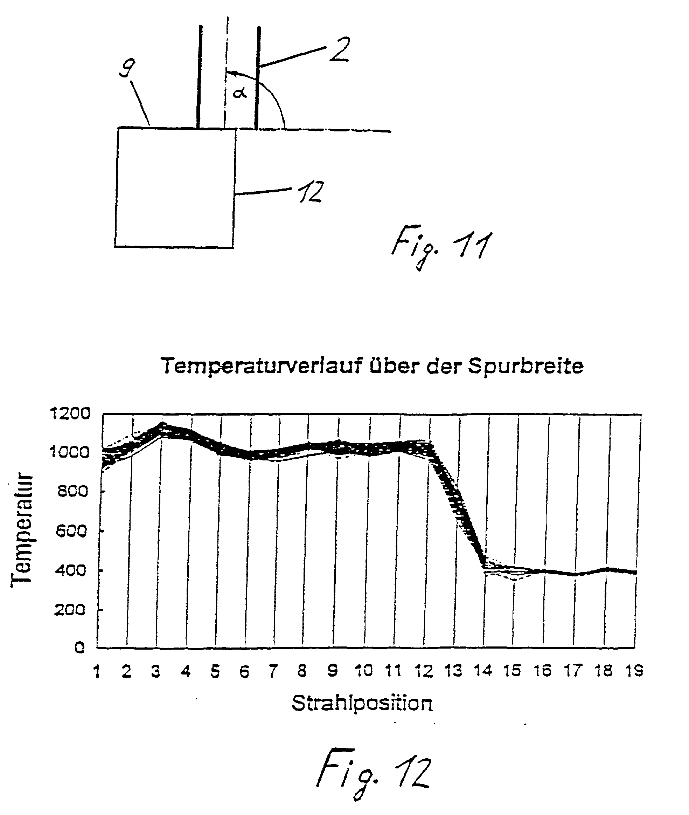

Die Fig. 6 bis 10, die weitere ähnliche schematische Darstellungen des Werkstücks 12 mit zugeordneter Laserstrahlführung 2 bzw. Strahlfleck 13 zeigen, lassen eine verfahrensgemäße angepaßte Kantenbehandlung bei zweiseitiger Bestrahlung einer Kante des Werkstücks 12 erkennen. Hierbei kann der Auftreffwinkel α des Laserstrahls bezogen auf die Kantenseiten (Fig. 6) variabel sein. Auch kann der Abstand der Härteoptik 4 zum Werkstück 12 veränderbar (Fig. 8) bzw. konstant (Fig. 10) sein.

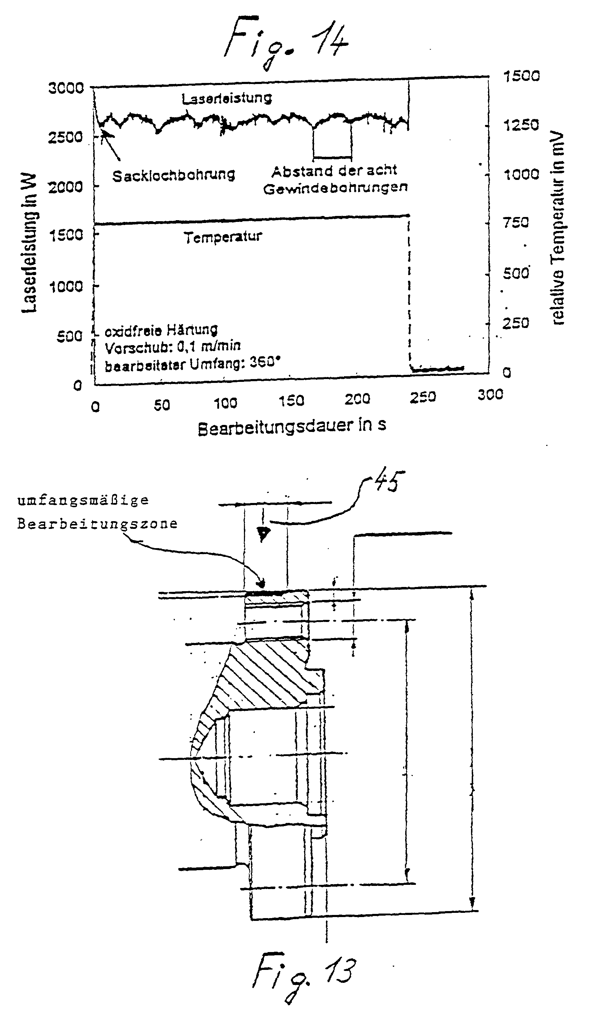

Fig. 11 zeigt eine Seitenansicht der Werkstücks 12 mit zugeordnetem Laserstrahl 2, der senkrecht auf die Werkstückoberfläche trifft, wobei der Auftreffwinkel α auch variiert werden kann. Bei der verfahrensgemäßen Kantenerkennung gemäß Fig. 11 wurde ein Tepmeraturverlauf über die Spurbreite ermittelt, wie dieser in dem Diagramm der Fig. 12 zu sehen ist, in dem die Strahlposition über die Temperatur aufgetragen ist. Dargestellt sind 120 Messungen, was bei einer Meßfrequenz von 60 Hz einer Prozeßdauer von 2s entspricht. Die Lage der Kante befindet sich bei der Strahlposition 13, wie aus Fig. 12 ersichtlich ist.

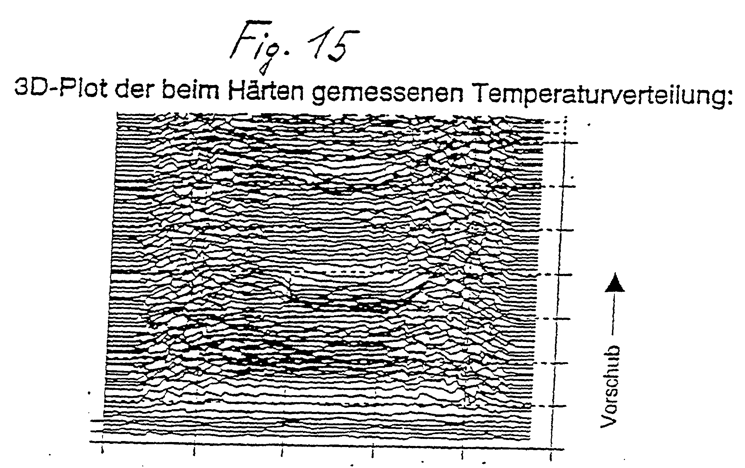

Fig. 13 zeigt eine schematische Schnittansicht eines einer oxidfreien Härtung ausgesetzten Werkstücks 12 mit einer Sacklochbohrung und acht über den Umfang des Werkstücks im Abstand zueinander angeordneten Gewindebohrungen bei einer Richtung des Arbeitslaserstrahls gemäß Pfeil 45. In dem der Fig. 13 zugeordneten Diagramm der Fig. 14 sind die Laserleistung in W, die relative Temperatur in mV und die Bearbeitungsdauer in s aufgetragen,wobei der Umfang des Werkstücks über 360° bei einem Vorschub von 0,1 m/min gehärtet wurde.

Fig. 15 zeigt schließlich einen 3D - Plot der beim Härten über zwei Bohrungen hinweg gemessenen Temperaturverteilung.

### Liste der Bezugszeichen

- 1: Strahlquelle, Festkörperlaser
- 2: Leistungsstrahl, Strahlengang des Arbeitslasers
- 3: Linse
- 4: Härteoptik
- 5: teildurchlässiger Umlenkspiegel
- 6: Linse
- 7: Pfeil für Ablenkgeschwindigkeit
- 8: Schwingspiegel
- 9: Werkstückoberfläche
- 10: Antriebsmotor
- 11: Doppelpfeil für Vorschubrichtungen
- 12: Werkstück
- 13: Arbeitslaserstrahlfleck
- 14: Auftreffort
- 15: Temperaturstrahlung
- 16: Umlenkspiegel
- 17: Temperaturkontrolleinrichtung
- 18: Bandpaßfilter
- 19: Blende
- 20: Linse
- 21: Lochblende
- 22: IR-Detektor
- 23: Doppelpfeil für Bewegung der Linse 20
- 24: Doppelpfeil für Bewegung der Lochblende 21
- 25: Ausgang der Temperaturkontrolleinrichtung
- 26: Eingang des Regelkreises 27
- 27: Regelkreis für Istgrößen
- 28: Regler
- 29: Ausgang des Regelkreises für Istgrößen
- 30: Eingang des Regelkreises 31 für Stellgrößen
- 31: Regelkreis für Stellgrößen
- 32: Ausgang des Regelkreises 33 für Sollgrößen
- 33: Regelkreis für Sollgrößen
- 34: Eingang des Regelkreises 33 für Sollgrößen
- 35: Ausgang der Strahlquelle 1
- 36: Ausgang des Antriebsmotors 10
- 37: Ausgang des Antriebs 38 des Schwingspiegels 8
- 38: Antrieb des Schwingspiegels 8
- 39: Ausgang des Regelkreises 31 für Stellgrößen
- 40: Eingang der Strahlquelle 1
- 41: Eingang des Antriebsmotors 10
- 42: Eingang des Antriebs 38 des Schwingspiegels 8
- 43: Pfeil für Bewegungsrichtung des Strahlflecks 13
- 44: Bahn der Führungsmaschine
- 45: Pfeil für Richtung des Arbeitslaserstrahls
- α: Auftreffwinkel des Arbeitslaserstrahls auf Werkstück

## Patentansprüche

1. Verfahren zur Geometrieerkennung und -verfolgung mittels ortsaufgelöster Temperaturmessung bei der thermischen Bearbeitung eines Bauteils (12) mittels Laserstrahlung (2), insbesondere beim Umwandlungshärten mit Laserstrahlung (2), wobei das Temperaturfeld des Bauteils (12) auf berührungslosem Wege mittels eines photothermischen Sensorsystems erfaßt wird,
**dadurch gekennzeichnet, daß**
die Erfassung des im Bauteil (12) durch die Prozeßwärme erzeugten Temperaturfeldes in seiner zweidimensionalen Projektion erfolgt, basierend auf Variationen der durch Änderungen der Bauteilgeometrie und der dadurch bedingten Volumen- und/oder Materialverteilung hervorgerufenen lokalen Wärmeleitung aus den ermittelten Daten des Temperaturfeldes die Bauteillage und -gestalt berechnet werden und nach Identifikation der charakteristischen Bauteilgeometrie spezielle Behandlungsalgorithmen für die jeweiligen erforderlichen Behandlungssituationen zielgerichtet eingesetzt werden.

2. Verfahren nach Patentanspruch 1, **dadurch gekennzeichnet, daß** die speziellen Behandlungsalgorithmen zielgerichtet zur Drosselung der Energiezufuhr an kritischen Stellen des Bauteils (12) wie Kanten, Spitzen, Bohrungen und dergleichen eingesetzt werden.

3. Verfahren nach Patentanspruch 1 und 2, **dadurch gekennzeichnet, daß** die Identifikation einer Bauteilkante und deren Lage zum Bearbeitungssystem zur Steuerung eines Aktors genutzt wird derart, daß die Lage der Bearbeitungszone durch einen Soll-Ist-Vergleich korrigiert wird und somit eine Positionsregelung auf der Basis eines photothermischen Sensors möglich ist.

4. Verfahren nach Patentanspruch 3, **dadurch gekennzeichnet, daß** als Aktor ein gesteuerter Schwingspiegelantrieb (38) verwendet wird.

5. Verfahren nach Patentansprüchen 1 bis 4, **dadurch gekennzeichnet, daß** durch ortsaufgelöste Energiezufuht eine homogene Temperaturverteilung im Bauteil (12) erzeugt und aus der räumlichen Verteilung der Energiezufuhr die Materialverteilung im Bauteil (12) und damit dessen Gestalt ermittelt wird, wobei die prinzipbedingt verbleibenden Regelabweichungen des Temperatursignals als zusätzliche Informationen zur Ermittlung der Bauteillage und - gestalt verwendet werden.

6. Verfahren nach Patentanspruch 1, **dadurch gekennzeichnet, daß** die der Identifikation der Bauteilgeometrie entsprechenden speziellen Behandlungsalgorithmen für die Bahnführung (44) eines Roboters eingesetzt werden.

7. Verfahren zum Härten von Werkstückoberflächen (9) mittels Strahlen (2), insbesondere mittels Laserstrahlen (2), bei dem eine laserstrahlformende Härteoptik (4) und die Werkstückoberfläche (9) relativ zueinander bewegt werden, der Auftreffort (14) des Arbeitslaserstrahlflecks (13) während des Härtens durch Ablenkbewegungen von Strahlumformungseinrichtungen der Härteoptik (4) quer zur Vorschubrichtung (11) oszilliert, die Temperaturstrahlung (15) des quer zur Vorschubrichtung (11) oszillierenden Auftreffortes (14) des Arbeitslaserstrahlflecks (13) mittels teildurchlässiger Spiegel (5) kolinear zum Strahlengang (2) des Arbeitslasers (1) durch die Härteoptik (4) hindurch einer Temperaturkontrolleinrichtung (17) zugeführt wird, von der stets momentan die Temperatur im Auftreffort (14) des Arbeitslaserstrahlflecks (13) erfaßt wird, die ermittelten Temperaturmeßdaten einem mit der Strahlquelle (1), der Strahlablenkung und der Vorschubbewegung gekoppelten Regler (28) eingegeben werden, in dem eine Temperaturverteilung quer zur Vorschubrichtung (11) ermittelt wird und über den eine darauf abgestimmte Verteilung der Laserstrahlenergie und eine angepaßte Steuerung der Ablenkbewegung der Strahlumformungseinrichtungen der Härteoptik (4) und der Vorschubbewegung unter Berücksichtigung bearbeitungsspezifischer Vorgaben erfolgen,
**dadurch gekennzeichnet, daß**
die ermittelten Temperaturmeßdaten fortlaufend dahingehend analysiert werden, ob die Proportionalität der Abweichung der Regelgröße (Temperatur) und der Stellgrößen (Laserleistung; Ablenkbewegung der Strahlumformungseinrichtungen; Vorschubbewegung) gewahrt ist, und im Fall, daß ein Temperaturwert unterhalb eines festgelegten Schwellenwertes ermittelt wird, obwohl die Laserleistung erhöht worden ist, was insbesondere an Kanten auftritt, der Bearbeitungs- / Meßbereich automatisch in unterschiedliche Teilsysteme / Bereiche aufgeteilt wird, für die einerseits die Proportionalität der Abweichung von Regelgröße und Stellgrößen wie zuvor gilt und in denen andererseits bei hoher Ablenkgeschwindigkeit nur eine verhältnismäßig geringe Energiemenge eingetragen wird.

## Claims

1. A method for geometry recognition and tracking by means of a locally resolved temperature measurement during the thermal processing of an element (12) by means of laser radiation (2), in particular, during transformation hardening with laser radiation (2), wherein the temperature field of the element (12) is determined in a contactless fashion by means of a photothermal sensor system,
**characterized by** the fact that
the temperature field generated in the element (12) by the process heat is determined in its two-dimensional projection, by the fact that the element position and shape are calculated from the determined data of the temperature field based on variations in the local thermal conduction caused by changes in the element geometry and the associated volume and/or material distribution, and by the fact that special treatment algorithms for the respectively required treatment situations are purposefully utilized after the identification of the characteristic element geometry.

2. The method according to Claim 1, **characterized by** the fact that the special treatment algorithms are purposefully utilized for choking the energy supply to critical points of the element (12), e.g., edges, points, bores and the like.

3. The method according to Claims 1 and 2, **characterized by** the fact that the identification of an element edge and its position relative to the processing system is utilized for controlling an actuator in such a way that the position of the processing zone is corrected based on a nominal/actual comparison and a position control can be realized on the basis of a photothermal sensor.

4. The method according to Claim 3, **characterized by** the fact that a controlled oscillatory mirror drive (38) is used as the actuator.

5. The method according to Claims 1-4, **characterized by** the fact that a homogenous temperature distribution is generated in the element (12) with the aid of a locally resolved energy supply, and by the fact that the material distribution in the element (12) and consequently its shape are determined from the spatial distribution of the energy supply, wherein the unavoidable residual deviations of the temperature signals are utilized as additional information for determining the element position and shape.

6. The method according to Claim 1, **characterized by** the fact that the special treatment algorithms that correspond to the identification of the element geometry are utilized for the path control (44) of a robot.

7. A method for hardening work piece surfaces (9) by means of beams (2), in particular, by means of laser beams (2), wherein a hardening optic (4) that forms the laser beam and the work piece surface (9) are moved relative to one another, wherein the point of impact (14) of the laser beam spot (13) oscillates transverse to the advance direction (11) during the hardening process due to deflection movements of beam transformation devices of the hardening optic (4), wherein the thermal radiation (15) of the point of impact (14) of the laser beam spot (13) which oscillates transverse to advance direction (11) is fed by means of partially transparent mirrors (5) to a temperature control device (17) through the hardening optic (4) collinear to the beam path (2) of the laser (1), wherein the temperature control device continuously measures the instantaneous temperature in the point of impact (14) of the laser beam spot (13), wherein the determined temperature measuring data are input into a controller (28) that is coupled to the beam source (1), the beam deflection arrangement and the advance movement mechanism and in which a temperature distribution transverse to the advance direction (11) is determined, and wherein said controller serves for realizing a distribution of the laser beam energy that is adapted to the temperature distribution transverse to the advance direction, as well as a correspondingly adapted control of the deflection movements of the beam transformation devices of the hardening optic (4) and the advance movement, namely by taking into account specific predetermined processing data,
**characterized by** the fact that
the determined temperature measuring data are continuously analyzed as to the fact whether the proportionality of the deviation of the control variable (temperature) and the adjusting variables (laser power; deflection movement of the beam transformation devices; advance movement) is preserved, and by the fact that the processing/measuring region is automatically divided into different partial systems/regions in case a temperature value is determined below a fixed threshold value although the laser power was increased as it occurs, in particular, on the edges, wherein the proportionality of the deviation of the control variable and the adjusting variables applies to said partial systems/regions as before, and wherein only a comparatively low amount of energy is introduced in these partial systems/regions at a high deflection speed.

## Revendications

1. Procédé pour la reconnaissance et le suivi de la géométrie au moyen d'une mesure de température analysée localement lors du traitement thermique d'un composant (12) au moyen de rayonnement laser (2), en particulier lors du durcissement de conversion par rayonnement laser (2), la zone de température du composant (12) étant enregistrée par un procédé sans contact au moyen d'un système capteur photothermique,
**caractérisé en ce que**
l'enregistrement de la zone de température générée dans le composant (12) par la chaleur de procédé s'effectue dans sa projection bidimensionnelle, la position et la forme du composant sont calculées à partir des données calculées de la zone de température sur la base de variations de la conduction thermique locale causée par des modifications de la géométrie du composant et de la répartition du volume et/ou du matériau ainsi conditionnée et, après l'identification de la géométrie caractéristique du composant, des algorithmes spéciaux de traitement sont utilisés de façon adéquate pour les situations de traitement nécessaires respectives.

2. Procédé selon la revendication 1, **caractérisé en ce que** les algorithmes spéciaux de traitement sont utilisés de façon adéquate pour l'étranglement de l'arrivée d'énergie dans des endroits critiques du composant (12) tels que des arêtes, des extrémités, des alésages et similaires.

3. Procédé selon les revendications 1 et 2, **caractérisé en ce que** l'identification d'une arête de composant et sa position par rapport au système de traitement est utilisée pour la commande d'un acteur de telle sorte que la position de la zone de traitement est corrigée par une comparaison prévue - réelle et qu'ainsi un réglage de la position est possible sur la base d'un capteur photothermique.

4. Procédé selon la revendication 3, **caractérisé en ce qu'**on utilise comme acteur une commande contrôlée de miroir pivotant (38).

5. Procédé selon les revendications 1 à 4, **caractérisé en ce qu'**une répartition homogène de la température dans le composant (12) est générée par une arrivée d'énergie analysée localement et la répartition du matériau dans le composant (12) et donc sa forme sont calculée à partir de la répartition dans l'espace de l'arrivée d'énergie, les erreurs de réglage, résiduelles en raison du principe, du signal de température étant utilisées comme informations supplémentaires pour la détermination de la position et de la forme du composant.

6. Procédé selon la revendication 1, **caractérisé en ce que** les algorithmes de traitement, spéciaux et correspondant à l'identification de la géométrie du composant, sont utilisés pour le guidage de trajectoire (44) d'un robot.

7. Procédé pour le durcissement de surfaces de pièce (9) au moyen de faisceaux (2), en particulier au moyen de faisceaux laser (2), avec lequel une optique de trempe (4) formant le faisceau laser et la surface de la pièce (9) sont déplacées l'une par rapport à l'autre, le lieu d'impact (14) de la tâche du faisceau laser de travail (13) oscille pendant le durcissement par des mouvements de déviation d'appareils de conversion de faisceau de l'optique de dureté (4) transversalement au sens d'avancement (11), le rayonnement de température (15) du lieu d'impact (14), oscillant transversalement au sens d'avancement (11), de la tâche du faisceau laser de travail (13) est amené au moyen de miroirs (5) semi-argentés de façon colinéaire par rapport à la trajectoire des rayons (2) du laser de travail (1) à travers l'optique de dureté (4) à un dispositif de contrôle de température (17), par lequel on enregistre toujours momentanément la température au lieu d'impact (14) de la tâche du faisceau laser de travail (13), les données calculées de mesure de température sont entrées dans un régulateur (28) couplé avec la source de rayonnement (1), la déviation du faisceau et le mouvement d'avancement, régulateur dans lequel une répartition de la température est calculée transversalement au sens d'avancement (11) et par lequel une répartition ajustée de l'énergie du faisceau laser et une commande adaptée du mouvement de déviation des dispositifs de conversion de faisceau de l'optique de dureté (4) et du mouvement d'avancement s'effectuent en tenant compte de données spécifiques au traitement,
**caractérisé en ce que**
les données calculées de la mesure de température sont analysées en permanence pour savoir si la proportionnalité de l'écart de la grandeur de réglage (température) et des grandeurs de commande (puissance de laser ; mouvement de déviation des dispositifs de conversion de faisceau ; mouvement d'avancement) est respectée, et dans le cas où une valeur de température est calculée au-dessous d'une valeur seuil définie, bien que la puissance du laser ait été augmentée, ce qui apparaît en particulier sur les arêtes, la plage de traitement/mesure est divisée automatiquement en systèmes partiels/secteur différents, pour lesquels d'une part la proportionnalité de l'écart de la grandeur de réglage et des grandeurs de commande est toujours valable et dans lesquels d'autre part, même avec une vitesse de déviation élevée, seule une quantité d'énergie relativement faible est apportée.
